# EUROPÄISCHE PATENTSCHRIFT

(11) **EP 1 072 768 B1**
(45) Veröffentlichungstag und Bekanntmachung des Hinweises auf die Patenterteilung: **03.09.2003**
(21) Anmeldenummer: 00115068.9
(22) Anmeldetag: 27.07.2000
(51) Int. Cl.: F02B 27/00, F02M 35/10, B29C 45/14

(54) **Gusswerkzeug mit Kernzug und Herstellungsverfahren für ein Saugrohr und Saugrohr mit einem durch einen Kernzug herstellbaren Hohlraum**
Casting tool with core puller and manufacturing process for a suction pipe and suction pipe with a cavity produceable by a core puller
Outil de coulée avec tire-noyau et procédé de fabrication d'une tubulure d'admission et tubulure d'admission avec une cavité pouvant être produite avec un tire-noyau

(30) Priorität: 27.07.1999 DE 19935254
(43) Veröffentlichungstag der Anmeldung: 31.01.2001
(73) Patentinhaber: FILTERWERK MANN + HUMMEL GMBH, 71638 Ludwigsburg (DE)
(72) Erfinder: Kosicki, Jürgen, 74391 Erligheim (DE)
(74) Vertreter: Voth, Gerhard, Dipl.-Ing.

(56) Entgegenhaltungen:
- DE-A- 4 334 141
- DE-A- 4 437 677
- US-A- 5 138 983
- US-A- 5 851 456

## Beschreibung

### Stand der Technik

Die Erfindung betrifft ein Gußwerkzeug für ein Saugrohr, in dem zur Bildung eines Hohlraums ein Kernzug vorgesehen ist, nach der Gattung des Patentanspruches 1. Außerdem betrifft die Erfindung ein Saugrohr, welches durch das besagte Gußwerkzeug herstellbar ist, nach der Gattung des Anspruches 5.

Aus der DE 43 34 141 ist ein Gußwerkzeug bekannt für einen Sammelbehälter. Dieser Sammelbehälter besteht aus Kunststoff, wobei ein Hohlkern vorgesehen ist der außen von Kunststoff umspritzt wird. Dieser Hohlkern stellt sozusagen die innere Wandung für das Kunststoffbauteil dar und wird nicht mehr aus dem Kunststoffteil entfernt.

Die US 5 138 983 beschreibt ein Saugrohr welches in üblicherweise spritzgießtechnisch hergestellt ist. Eine Variation des Saugrohrs hat zur Folge, dass das Spritzgießwerkzeug vollständig geändert oder angepaßt werden muss.

Saugrohre, die in Mehrschalentechnik hergestellt werden, bekannt, zum Beispiel aus der DE 44 37 677 C2. Insbesondere Kunststoffsaugrohre lassen sich in Mehrschalentechnik einfach herstellen. Die Schalen werden einzeln gegossen und anschließend zur Bildung des Saugrohres miteinander verschweißt.

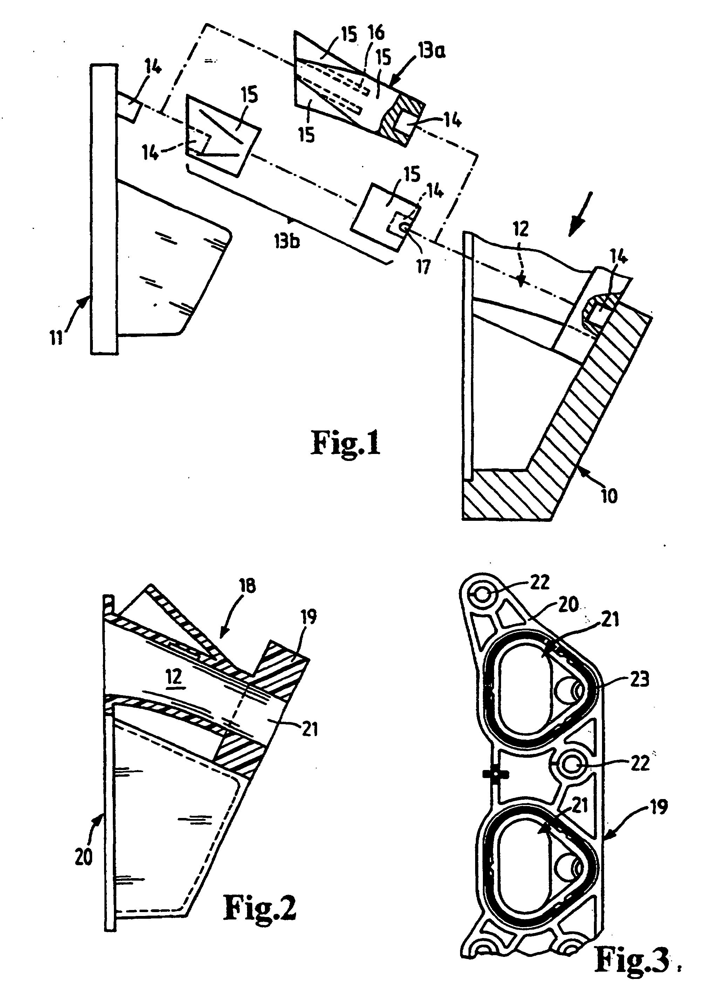

Die Spritzgießformen für Kunststoffsaugrohre sind jedoch sehr teuer und rentieren sich daher nur bei hohen Stückzahlen. Um die Stückzahlen für die Spritzgußform zu erhöhen, beschreibt das genannte Dokument ein Verfahren, nach dem unterschiedliche Einlegeteile 5 (siehe Figur 1) in die Schalen 1, 3 des Saugrohrs eingebracht werden können. Mit Hilfe der Einlegeteile lassen sich unterschiedliche Saugkanalgeometrien erzeugen, die sich in Länge und Querschnitt von einander unterscheiden. Die beiden Saugrohrschalen 1, 3 bleiben dabei unverändert. Mit diesem Verfahren können daher Saugrohre für unterschiedliche Motorvarianten eines Fahrzeugtyps hergestellt werden. Die Kosten der Spritzgießwerkzeuge für die beiden Schalen 1, 3 verteilen sich somit auf die gesamte Motorenpalette, wodurch eine höhere Wirtschaftlichkeit der Kunststofflösung erzielt wird.

Die Gestaltungsmöglichkeiten durch Variation des Einlegeteils werden jedoch dadurch begrenzt, daß dieser nur einen gewissen Teil des luftführenden Saugwegs bildet. Bestimmte Bereiche der Saugkanäle werden alleine durch die Schalen 1, 3 gebildet, wodurch diese unabhängig vom verwendeten Einlegeteil 5 eine unveränderte Geometrie aufweisen. In diesem Zusammenhang ist insbesondere die mit dem Zylinderflansch verbundene Saugrohrschale 3 zu nennen, durch die der letzte Saugkanalabschnitt vor den zylinderseitigen Auslässen gebildet wird. Querschnitt und Geometrie dieses Saugkanalteils müssen auf die Motorvariante mit dem größten Luftbedarf ausgelegt werden. Für andere Motorvarianten ist die Geometrie des Saugkanals in diesem Bereich somit nicht optimal. Gerade im letzten Stück vor den Zylindereinlässen kann durch eine entsprechende Gestaltung der Saugkanalgeometrie das Ansaugverhalten der Brennkraftmaschine besonders günstig beeinflußt werden.

Man könnte nun in Abhängigkeit von der Motorvariante für die Saugrohrschale 3 unterschiedliche Spritzgießformen vorsehen und nur die Schale 1 für alle Varianten verwenden. Dadurch würde der Einsparungseffekt, der durch das Einlegeteil 5 erzielt wird, jedoch vermindert, und somit auch die Wirtschaftlichkeit der Lösung.

Die Aufgabe der Erfindung besteht daher darin, ein Saugrohr bzw. ein Forrnwerkzeug zu dessen Herstellung zu schaffen, welche eine Modifikation der Saugrohrgeometrie kostengünstig ermöglichen.

Diese Aufgabe wird durch die Merkmale des Patentanspruches 1 gelöst, der sich auf ein Gußwerkzeug für eine Saugrohrschale bezieht. Ferner wird gemäß Anspruch 5 ein Saugrohr beansprucht, welches mit dem besagten Gußwerkzeug herstellbar ist. Zuletzt wird gemäß Anspruch 9 ein Verfahren zur Herstellung eines Saugrohrs mit genanntem Gußwerkzeug beansprucht.

### Vorteile der Erfindung

Das erfindungsgemäße Gußwerkzeug besitzt zur zumindest teilweisen Bildung eines Hohlraums des zu gießenden Saugrohrs einen Kernzug. Dieser läßt sich in die Form einbringen, wodurch komplexere Bauteilstrukturen gegossen werden können. Beim Entformen der gegossenen Saurohrschale kann der Kernzug einzeln aus der Schale herausgezogen werden, wodurch Hinterschneidungen in der zugehörigen Gußform vermieden werden können.

Für das erfindungsgemäße Gußwerkzeug werden vorteilhafterweise mehrere Kernzüge vorgesehen, die je nach Anforderung an die Geometrie des Hohlraums im Gußwerkzeug ausgewechselt werden können. Hierdurch lassen sich die Formkosten für die Schaffung einer Saugrohrbaureihe wesentlich reduzieren. Das Gußwerkzeug für die Schaffung der Saugrohrschale mit besagtem. Hohlraum bleibt das gleiche. Für die verschiedenen Varianten sind lediglich unterschiedliche Kemzüge zu fertigen, welche in Abhängigkeit vom Anwendungsfall ausgetauscht werden. Die unterschiedlichen Saugrohrvarianten können demnach in ihrer Luftführungsgeometrie optimal an die herrschenden Strömungsverhältnisse angepaßt werden. Zusätzlich besteht selbstverständlich die Möglichkeit durch verschiedene Kemeinsätze bzw. Modifikation anderer Saugrohrschalen die Variantenvielfalt zu erhöhen. Der zu bildende Hohlraum muß nicht ausschließlich durch den Kemeinzug gebildet werden. Es kann zum Beispiel auch eine Mischtechnik unter Verwendung von Schmelzkemen zum Einsatz kommen. Hierbei läßt sich durch Verwendung unterschiedlicher Schmelzkeme die Variantenvielfalt erhöhen.

Eine sinnvolle Ausgestaltung des Erfindungsgedankens sieht vor, den Kernzug aus mehreren Kernteilen aufzubauen. Hierdurch kann die Komplexität des verwendeten Kernzugs erhöht werden. Durch eine entsprechende Teilung des Kerns wird zum Beispiel die Bildung von Hinterschneidungen in Bezug auf die Ziehrichtung des Kemzugs möglich.

Die einzelnen Kernteile können weiterhin vorteilhafterweise derart gestaltet werden, daß sie untereinander kombinierbar sind. Dadurch wird die Variantenvielfalt, die durch die unterschiedlichen Kernzüge erzeugt werden kann, erweitert. Entsprechend kann bei gleichbleibender Zahl der zu bildenden Hohlraumgeometrien die Zahl der Kernteile verringert werden.

Das Saugrohr muß im Gußwerkzeug nicht als Gesamtteil hergestellt werden. Ebenso ist es gemäß einer sinnvollen Ausgestaltung des Erfindungsgedankens möglich, das Saugrohr in Mehrschalentechnik herzustellen. Die erfindungsgemäßen Kerneinzüge können in jeder der Schalen untergebracht werden.

Ein mit dem genannten Gußwerkzeug hergestelltes Saugrohr weißt erfindungsgemäß eine Wandung auf, die zumindest teilweise doppelwandig unter Bildung eines Zwischenraumes ausgeführt sein kann. Hierdurch wird erreicht, daß bei der Bildung unterschiedlicher Luftführungsgeometrien durch Kerneinsätze unterschiedlichen Volumens die daraus resultierende Materialanhäufung in der Saugrohrwand vermieden wird. Die Doppelwandigkeit der Wandung kommt durch die gebildeten Zwischenräume zustande. Die Zwischenräume können durch entsprechende Ansätze an dem verwendeten Kern gebildet werden. Hierdurch entsteht also kein zusätzlicher Fertigungsaufwand. Die Vorteile der genannten Gestaltung ist eine Materialeinsparung sowie das Vermeiden eines übermäßigen Bauteilverzugs durch Materialanhäufungen in den Saugrohrwänden.

Eine besonders günstige Ausführungsform der Erfindung sieht vor, die Zwischenräume durch Öffnungen mit dem luftführenden Innenraum des Saugrohrs korrespondieren zu lassen. Dadurch werden die Zwischenräume akustisch mit der Luftführungsgeometrie des Saugrohres gekoppelt. Die sich ergebenden Dämpfungseffekte wirken sich positiv auf das Ansauggeräusch der Brennkraftmaschine aus. Die Zwischenräume können zum Beispiel als Nebenschlußresonator oder als Resonanzrohr genutzt werden. Durch die Geometrie der Öffnung läßt sich die Qualität des akustischen Effektes beeinflussen. Die Geometrie der Zwischenräume selbst ist durch die vorhandene Wandstärke vorgegeben.

Für die Gestaltung der letzten Abschnitte der Saugkanäle zu den zylinderseitigen Austritten hin ist die Verwendung der beschriebenen Kernzüge besonders vorteilhaft. In diesem Bereich kann dadurch eine Modifikation der Luftführungsgeometrie der Saugkanäle erreicht werden, wobei sich mannigfaltige Möglichkeiten zur Beeinflussung des Luftstroms ergeben. Durch die Nähe zu den Zylindereinlässen sind strömungstechnische Maßnahmen in diesem Saugrohrbereich besonders wirksam.

Eine besonders fertigungsgünstige Variante des Saugrohrs ergibt sich durch Ausführung der besagten Öffnung zu den Zwischenräumen als Aussparung, die in die Ebene der vorgesehenen Austritte mündet Diese Aussparung können hinterschneidungsfrei durch den verwendeten Kernzug mitgebildet werden. Die Öffnung wird nach der Montage des Saugrohrs auf dem Zylinderkopf durch diesen teilweise mitgebildet.

Die Verwendung unterschiedlicher Kernzüge im Bereich des Zylinderkopfflansches des Saugrohrs ermöglicht insbesondere eine Anpassung der Saugkanäle auf Motorvarianten unterschiedlicher Leistung. Brennkraftmaschinen geringerer Leistung benötigen einen geringeren Querschnitt in den Saugkanälen. In diesem Bereich bietet es sich an, Kernzüge zu verwenden, die einen geringeren Saugkanalquerschnitt erzeugen. Da die Außenwand des Saugkanals jedoch durch das verwendete Gußwerkzeug vorgegeben ist, muß die sich dadurch ergebende größere Wandstärke durch die besagten Zwischenräume verringert werden. In diesem Bereich ergibt sich eine doppelwandige Struktur des Saugrohrs, wobei die Zwischenräume wie beschrieben zur Beeinflussung der Ansaugakustik verwendet werden können. Diese lassen sich ohne zusätzlichen Fertigungsaufwand in das Saugrohr einbringen. Dies hat den zusätzlichen Vorteil, daß bei den Motoren geringerer Leistung ein zusätzlicher Dämpfungseffekt entsteht. Gerade bei Motoren geringerer Leistung muß aus
Kostengründen auf andere Dämpfungsmaßnahmen häufig verzichtet werden. Die Nutzung der Zwischenräume ergibt hierzu eine kostengünstige Alternative.

Das Verfahren gemäß Anspruch 9 ist dazu geeignet mit Hilfe des erfindungsgemäßen Gußwerkzeugs das beschriebene Saugrohr herzustellen. Vor der Herstellung des Saugrohrs oder der Saugrohrschale werden die entsprechenden Kernzüge ausgewählt und in der Gußform fixiert. Die Formteile werden zusammengesetzt und anschließend durch das Saugrohrmaterial ausgespritzt. Hierbei kommt insbesondere Kunststoff zur Anwendung. Nach dem Erkalten des Gußmaterials kann das Bauteil entformt werden. Dabei können die Kernzüge eventuell einzeln entformt werden. Bei Mehrteiligen Kernrügen ist es sogar möglich die Kemteile einzeln zu entformen.

Diese und weitere Merkmale von bevorzugten Weiterbildungen der Erfindung gehen außer aus den Ansprüchen auch aus der Beschreibung und den Zeichnungen hervor.

### Zeichnung

Weitere Einzelheiten der Erfindung werden in den Zeichnungen anhand von schematischen Ausführungsbeispielen beschrieben. Hierbei zeigen
- Figur 1: ein Gußwerkzeug für die flanschseitige Schale eines Saugrohrs mit zwei möglichen zum Einsatz kommenden Kernzügen, wobei die Form teilweise geschnitten dargestellt ist,
- Figur 2: eine Saugrohrschale in der teilweise geschnittenen Seitenansicht, wie sie mit dem Formwerkzeug gemäß Figur 1 unter Anwendung eines der beiden Kernzüge hergestellt werden kann,
- Figur 3: die Aufsicht auf den Zylinderkopfflansch des Saugrohrs gemäß Figur 2,
- Figur 4: drei Saugrohrschalen vor dem Zusammenbau des Saugrohrs, wobei die zylinderkopfseitige Schale mit dem Gußwerkzeug gemäß Figur 1 unter Verwendung des anderen Kernzugs hergestellt ist und
- Figur 5: die Aufsicht auf den Zylinderkopfflansch des Saugrohrs gemäß Figur 4.

### Beschreibung der Ausführungsbeispiele

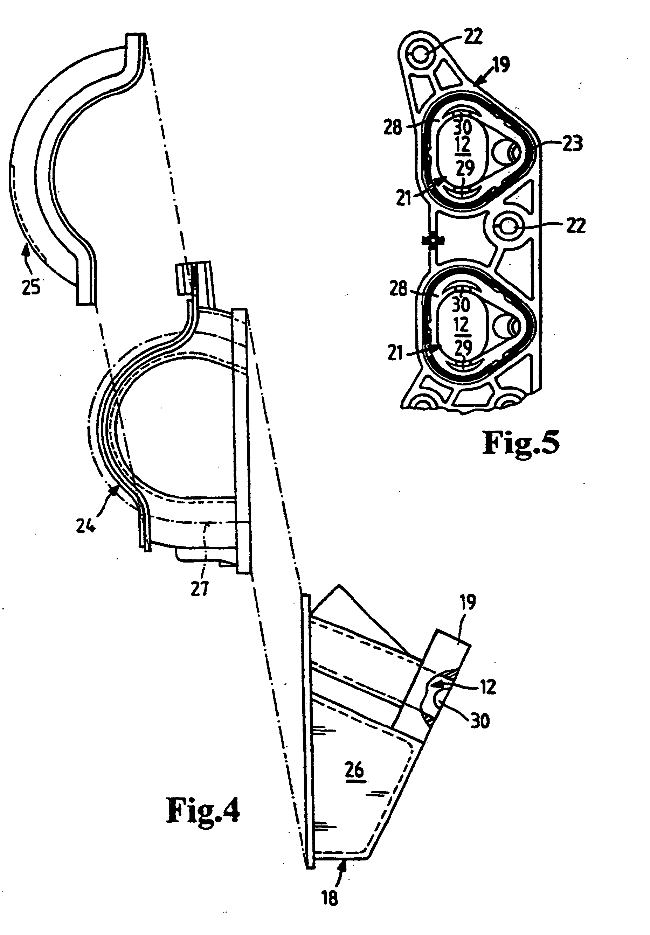

Das Gußwerkzeug gemäß Figur 1 besteht aus einer Außenhälfte 10 und einer Innenhälfte 11. Das Gußwerkzeug weist eine nicht dargestellte zusätzliche Deckelhälfte auf, die in Richtung des Pfeiles jenseits der dargestellten Bruchlinie der Außenhälfte 10 angebracht wird. Zur Bildung eines durch das Bezugszeichen 12 angedeuteten Hohlraums in der Außenhälfte 10 können unterschiedliche Kernzüge 13 a, 13b in mindestens einer der Formhälften fixiert werden. Hierzu sind Aufnahmen 14 vorgesehen. Die Kernzüge bestehen aus einzelnen Kernteilen 15, welche durch Verbinder 16 in ihrer Lage zueinander fixiert werden können. Das austrittsseitige Kernteil des Kemzugs 13b hat zusätzlich einen Absatz 17 zur Bildung einer nicht dargestellten Öffnung in der Saugrohrwand (vergleiche Figuren 4 und 5).

Durch Zusammensetzen des Formwerkzeuges werden die Kernteile 15 des ausgewählten Kernzugs in der Form fixiert. Diese kann anschließend ausgespritzt werden, wodurch zum Beispiel die Schale eines Kunststoffsaugrohres entsteht. Die Kernteile können nach dem Abnehmen der Formhälften aus der Saugrohrschale herausgezogen werden.

Eine in Figur 2 dargestellte Schale 18 des Saugrohrs wurde mit Hilfe des Kernzuges 13a hergestellt. Zu erkennen ist ein Zylinderkopfflansch 19 und ein angedeuteter Verbindungsflansch 20 für weitere Saugrohrschalen. Der obere Teil der Schale ist geschnitten dargestellt. Es ist der Hohlraum 12 zu erkennen, der den letzten Bereich eines Ansaugkanals des Saugrohrs zum Zylinderkopf hin darstellt.

Ein Vergleich der Schale mit der Darstellung des Zylinderkopfflansches 19 gemäß Figur 3 macht deutlich, daß der Hohlraum vom Zylinderkopfflansch (19) zum Verbindungsflansch 20 hin seine Querschnittsform ändert. Dies erklärt die Gestaltung des Kernzugs 13a gemäß Figur 1, welcher aus mehreren Teilen zusammengesetzt ist. Diese lassen sich nacheinander über einen durch den Hohlraum 12 gebildeten Austritt 21 herausziehen. Die Verbinder 16 des Kernzugs 13a sind entsprechend der Auszugrichtung des Kernzugs ausgerichtet, so daß sich keine Hinterschneidungen zwischen den Kernteilen 15 ergeben. In Figur 3 sind weiterhin Schraubenaufnahmen 22 für die Befestigung des Saugrohrflansches auf dem Zylinderkopf und Dichtringe 23 zu erkennen.

Figur 4 zeigt die Kombination der bereits beschriebenen Schale 18 mit einem Mittelteil 24 und einem Saugkanaldeckel 25 zu einem kompletten Saugrohr. Durch Modifikation des Mittelteils 24 läßt sich die Geometrie der Saugkanäle auch im restlichen Saugrohr beeinflussen. Weiterhin kann für die Bildung von Saugkanalteilen im Mittelteil eine Anzahl von Kernzügen entsprechend der in Figur 1 beschriebenen Weise zum Einsatz kommen. Eine Hohlstruktur 26 der Schale bildet zusammen mit der Mittelschale 24 den Sammelraum, von dem einzelne Saugkanäle 27 abgehen.

Der in Figur 4 dargestellte Zylinderkopfflansch 19 ist durch den Kernzug 13b gemäß Figur 1 hergestellt worden. Der so gebildete Hohlraum 12 weist eine geringere Querschnittsfläche auf als der mit dem Kern 13a hergestellte. Dies wird durch einen Vergleich der Figuren 3 und 5 deutlich. Bis auf die Querschnittsfläche des Hohlraums 12 und Zwischenräume 29 unterscheidet sich der in Figur 5 dargestellte Zylinderkopfflansch nicht von dem gemäß Figur 3. Zuerkennen sind die Austritte 21 mit der geringeren Querschnittsfläche. Eine Wandung 28 des Saugrohrs im Bereich des Zylinderkopfflansches ist teilweise doppelwandig ausgeführt. Dadurch entstehen die Zwischenräume 29 und die Wandstärke der Wandung bleibt trotz des gleichen Außendurchmessers des Saugrohrs und des geringeren Querschnitts des Hohlraumes 12 im wesentlichen gleich. Zur Verbindung der Zwischenräume 29 mit dem Hohlraum 12 sind Aussparungen 30 im inneren Teil der Doppelwandung vorgesehen, die durch die Absätze 17 des Kernzugs 13b gemäß Figur 1 gebildet werden. Diese sind auch der Figur 4 zu entnehmen.

## Patentansprüche

1. Gußwerkzeug für ein Saugrohr, wobei zur zumindest teilweisen Bildung eines Hohlraumes (12) des besagten Saugrohres Kernzüge (13a, 13b) vorgesehen sind und die Kernzüge zur Bildung unterschiedlicher Hohlraumvarianten im Gußwerkzeug auswechselbar sind, **dadurch gekennzeichnet, dass** dieses Gußwerkzeug für die Herstellung einer Schale (18) vorgesehen ist, welche einen Teil des Saugrohres bildet, wobei die Schale wenigstens einen Zylinderkopfflansch 19 aufweist und einen Verbindungsflansch (20) für weitere Saugrohrschalen.

2. Gußwerkzeug nach Anspruch 1, **dadurch gekennzeichnet, daß** der Kernzug (13a,13b) aus mehreren Kernteilen (15) besteht.

3. Gußwerkzeug nach Anspruch 2, **dadurch gekennzeichnet, daß** die Kernteile (15) der auswechselbaren Kernzüge (13a,13b) untereinander kombinierbar sind.

4. Saugrohr hergestellt mit einem Gußwerkzeug nach Anspruch 1 mit einem Hohlraum (12) der durch einen Kernzug (13a, 13b) des Gußwerkzeuges zumindest teilweise herstellbar ist, **dadurch gekennzeichnet, dass** eine Wandung (289 des Saugrohres die den Hohlraum begrenzt zumindest teilweise doppelwandig unter Bildung mindestens eines Zwischenraumes 29 ausgeführt ist.

5. Saugrohr nach Anspruch 4, **dadurch gekennzeichnet, daß** der Zwischenraum (29) eine Öffnung zum luftführenden Innenraum des Saugrohres aufweist.

6. Saugrohr nach einem der Ansprüche 4 oder 5, **dadurch gekennzeichnet, daß** der Hohlraum (12) den letzten Abschnitt eines Saugkanals zu einem zylinderseitigen Austritt (21) des Saugrohrs darstellt, wobei der Austritt die Aushebeöffnung für den Kernzug (13a,13b) ist.

7. Saugrohr nach dem auf Anspruch 5 rückbezogenen Anspruch 7, **dadurch gekennzeichnet, daß** die besagte Öffnung aus einer Aussparung (30) besteht, die in dem Wandteil zwischen Hohlraum (12) und Zwischenraum (29) untergebracht ist und deren Rand in den des Austrittes (21) hineinläuft.

8. Verfahren zur Herstellung eines Saugrohres, **dadurch gekennzeichnet, daß** ein Gußwerkzeug gemäß einem der Ansprüche 1 bis 4 zur Anwendung kommt und dabei zumindest die folgenden Schritte durchlaufen werden:
- passenden Kernzug (13a,13b) auswählen,
- Kernzug mit den restlichen Formteilen (10, 11, 18) zum Gußwerkzeug zusammenfügen,
- Gußwerkzeug mit Gußwerkstoff füllen,
- Gußwerkstoff erstarren lassen,
- Gußteil entformen, und Kernzug ziehen.

## Claims

1. Moulding tool for an induction manifold, wherein core pullers (13a, 13b) are provided for the at least partial formation of a hollow chamber (12) of said induction manifold, and the core pullers are interchangeable to form different hollow chamber variants in the moulding tool, **characterised in that** this moulding tool is provided for the production of a shell (18), which forms a part of the induction manifold, the shell having at least one cylinder head flange (19) and a connecting flange (20) for additional induction manifold shells.

2. Moulding tool according to claim 1, **characterised in that** the core puller (13a, 13b) comprises a plurality of core parts (15).

3. Moulding tool according to claim 2, **characterised in that** the core parts (15) of the interchangeable core pullers (13a, 13b) are combinable with one another.

4. Induction manifold produced with a moulding tool according to claim 1, having a hollow chamber (12), which is at least partially producible by a core puller (13a, 13b) of the moulding tool, **characterised in that** a wall (28) of the induction manifold, which wall defines the hollow chamber, is at least partially a double wall so as to form at least one intermediate chamber (29).

5. Induction manifold according to claim 4, **characterised in that** the intermediate chamber (29) has an opening towards the air-conducting interior of the induction manifold.

6. Induction manifold according to one of claims 4 or 5, **characterised in that** the hollow chamber (12) represents the final portion of an induction port leading to an outlet (21) of the induction manifold on the cylinder side, the outlet being the ejection opening for the core puller (13a, 13b).

7. Induction manifold according to claim 6, when dependent on claim 5, **characterised in that** said opening includes a recess (30) which is accommodated in the wall part between hollow chamber (12) and intermediate chamber (29), and the edge of said recess extends into that of the outlet (21).

8. Method of producing an induction manifold, **characterised in that** a moulding tool according to one of claims 1 to 4 is used, and at least the following steps are performed therefor:
- selection of appropriate core puller (13a, 13b),
- joining core puller to the remaining moulded parts (10, 11, 18) to form the moulding tool,
- filling moulding tool with mouldable material,
- allowing mouldable material to solidify, and
- removing moulded part from mould and pulling core puller.

## Revendications

1. Outil de coulée pour une tubulure d'admission selon lequel, au moins pour former en partie une cavité (12) de la tubulure d'admission, des tire-noyau (13a, 13b) sont prévus interchangeables pour former des variantes de cavités différentes dans l'outil de coulée,
**caractérisé en ce que**
cet outil de coulée est prévu pour la fabrication d'une coquille (18) formant une partie de la tubulure d'admission,
la coquille ayant au moins une bride de culasse (19) et une bride de liaison (20) pour d'autres coquilles de tubulures d'admission.

2. Outil de coulée selon la revendication 1,
**caractérisé en ce que**
le tire-noyau (13a, 13b) est formé de plusieurs parties de noyau (15).

3. Outil de coulée selon la revendication 2,
**caractérisé en ce que**
les parties de noyau (15) des tire-noyau interchangeables (13a, 13b) peuvent être combinées entre elles.

4. Tubulure d'admission fabriquée à l'aide d'un outil de coulée selon la revendication 1, comportant une cavité (12) réalisée au moins en partie par un tire-noyau (13a, 13b) de l'outil de coulée,
**caractérisée en ce qu'**
une paroi (289) de la tubulure d'admission qui délimite la cavité est réalisée au moins en partie à double paroi en formant au moins un espace intermédiaire (29).

5. Tubulure d'admission selon la revendication 4,
**caractérisée en ce que**
l'espace intermédiaire (29) comporte une ouverture pour conduire de l'air dans la cavité de la tubulure d'admission.

6. Tubulure d'admission selon l'une des revendications 4 ou 5,
**caractérisée en ce que**
la cavité (12) constitue le dernier segment d'un canal d'admission vers une sortie (21) de la tubulure d'admission du côté du cylindre et la sortie est l'orifice d'extraction du tire-noyau (13a, 13b).

7. Tubulure d'admission selon la revendication 5 combinée à la revendication 7,
**caractérisée en ce que**
l'ouverture se compose d'une découpe (30) prévue dans la partie de paroi entre la cavité (12) et le volume intermédiaire (29) et dont le bord rejoint celui de la sortie (21).

8. Procédé de fabrication d'une tubulure d'admission,
**caractérisé par**
l'application d'un outil de coulée selon l'une des revendications 1 à 4 et comprenant les étapes suivantes :
- sélection d'un tire-noyau adapté (13a, 13b),
- assemblage du tire-noyau avec les autres parties de moule (10, 11, 12) de l'outil de coulée,
- remplir l'outil de coulée avec le matériau de coulée,
- laisser figer le matériau de coulée,
- démouler la pièce coulée et extraire le tire-noyau.
